# EUROPEAN PATENT APPLICATION

(11) **EP 4 597 702 A1**
(43) Date of publication of application: **06.08.2025**
(21) Application number: 23938629.5
(22) Date of filing: 20.11.2023
(51) Int. Cl.: H01M 50/204, G01B 11/02, H01M 50/102

(54) **BATTERY MODULE AND METHOD FOR DETERMINING CENTER OF BATTERY CELL**

(30) Priority: 19.05.2023 KR 20230065059
(71) Applicant: LG Energy Solution, Ltd., Seoul 07335 (KR)
(72) Inventor: LEE, Chang Hun, Daejeon 34122 (KR)
(74) Representative: Goddar, Heinz J.
(86) International application number: PCT/KR2023/018699
(87) International publication number: WO 2024/242259

(57) **Abstract**

The present invention relates to a battery module and a method for determining a center of a battery cell, and more particularly, to a battery module and a method for determining a center of a battery cell, in which a central position of the battery cell is capable of being contactlessly measured to prevent misalignment of the battery cell and prevent damage to the battery cell to improve quality of the battery module.

The battery module according to the present invention is characterized by including a plurality of battery cells, and a battery cell case that accommodates the plurality of battery cells, wherein a central position of each of the plurality of battery cells in a longitudinal direction is marked on a surface of the battery cell.

## Description

### TECHNICAL FIELD

### CROSS-REFERENCE TO RELATED APPLICATION

The present application claims the benefit of the priority of Korean Patent Application No. 10-2023-0065059, filed on May 19, 2023, which is hereby incorporated by reference in its entirety.

### TECHNICAL FIELD

The present invention relates to a battery module and a method for determining a center of a battery cell, and more particularly, to a battery module and a method for determining a center of a battery cell, in which a central position of the battery cell is capable of being contactlessly measured to prevent misalignment of the battery cell and prevent damage to the battery cell to improve quality of the battery module.

### BACKGROUND ART

Recently, as prices of energy sources rise due to depletion of fossil fuels and interests about environmental pollution are amplified, a need for eco-friendly alternative energy sources is indispensable for life in the future. Accordingly, research continues on various power generation technologies using sunlight, wind power, tidal power, and so on, and there is also a continuing great interest in power storage systems, such as batteries, for more efficiently using electrical energy generated through the technologies.

Moreover, as the technical development of and a demand for mobile electronic devices and electric vehicles using batteries increase, a demand for batteries as energy sources rapidly increases. Accordingly, much research is conducted on batteries that can meet the various needs.

Batteries receive much attention as energy sources for various products such as mobile devices and electric vehicles. In particular, secondary batteries are excellent energy resource that can replace the use of existing products using fossil fuels, and attract interest as eco-friendly energy sources because by-products of the energy use are not generated.

The secondary batteries also receive attention as power sources for electric vehicles (EV), hybrid electric vehicles (HEV), plug-in hybrid electric vehicles (plug-in HEV), and the like, which are proposed as solutions to solve air pollution, and the like, caused by existing gasoline vehicles, diesel vehicles, and the like, that use fossil fuel. That is, these secondary batteries are used in the form of a battery pack including a plurality of battery modules.

In the secondary batteries, battery cells are assembled to constitute a battery module, and the battery module is provided in plurality to constitute a battery pack. Here, the plurality of battery cells need to be aligned to be stacked. According to the related art, a jig is used to align the plurality of battery cells based on one surface of a lead tab portion of each of the battery cells. For example, it is a mechanical method of alignment based on one surface of a negative electrode.

According to the related art, as alignment is performed in a contact method, there is a problem that when the battery cells are reversed, a reference surface is reversed to cause misalignment so that the battery cells are misaligned. In addition, because of the contact alignment using a jig, there is also a problem that the battery cells are damaged during the alignment.

### DISCLOSURE OF THE INVENTION

### TECHNICAL PROBLEM

The present invention has been devised to solve the problems as above and an object of the present invention is to provide a battery module and a method for determining a center of a battery cell, in which a central position of the battery cell is capable of being contactlessly measured to prevent misalignment of the battery cell and prevent damage to the battery cell to improve quality of the battery module.

### TECHNICAL SOLUTION

A battery module according to the present invention may include a plurality of battery cells, and a battery cell case that accommodates the plurality of battery cells, wherein a central position of each of the plurality of battery cells in a longitudinal direction is marked on a surface of the battery cell.

The central position may be marked on the surface of the battery cell and with a line in a direction perpendicular to the longitudinal direction of the battery cell.

The central position may be marked with an imprint on the surface of the battery cell.

In the battery module according to the present invention, all of the central positions of the plurality of battery cells may be stacked to overlap each other.

A method for determining a center of a battery cell according to the present invention may include a disposing process of disposing the battery cell so that both ends of the battery cell are spaced certain distances from measuring parts, respectively, a measuring process of measuring a distance from the measuring part to each of both the ends of the battery cell, and a determining process of receiving information of the distances to both the ends of the battery cell to determine a central position of the battery cell by a determining part.

In the determining process, the measuring part may measure a shape of each of both the ends of the battery cell to visually express the shapes of both the ends of the battery cell.

In the measuring process, the visually expressed shapes of both the ends of the battery cell may be synthesized.

In the measuring process, the synthesized shapes of both the ends of the battery cell may be displayed on a display device.

In the determining process, a value obtained by adding half the total length of the battery cell, which corresponds to a length obtained by subtracting the distance from each of the measuring parts to both the ends of the battery cell from the distance between the measuring parts, may be a distance from the measuring part to the central position of the battery cell.

The method may further include a marking process of marking the determined central position of the battery cell on the battery cell by a marking part.

In the marking process, the central position of the battery cell may be marked with an imprint on a surface of the battery cell.

The method may further include an aligning process of re-disposing the battery cell according to the central position.

The measuring part may be a laser profile sensor.

### ADVANTAGEOUS EFFECTS

The battery module and the method for determining the center of the battery cell according to the present invention have the effects that the central position of the battery cell is capable of being contactlessly measured to prevent the misalignment of the battery cell and prevent the damage to the battery cell to improve the quality of the battery module.

### BRIEF DESCRIPTION OF THE DRAWINGS

FIG. 1 is a perspective view illustrating a battery cell according to the present invention.
FIG. 2 is a perspective view illustrating a state in which a battery cell is stacked according to the present invention.
FIG. 3 is a flowchart illustrating a method for determining a center of a battery cell according to the present invention.
FIG. 4 is a perspective view illustrating a state before a battery cell is measured using a measuring part according to the present invention.
FIG. 5 is a perspective view illustrating a state in which a battery cell is measured using a measuring part according to the present invention.

### MODE FOR CARRYING OUT THE INVENTION

Hereinafter, preferred embodiments of the present invention will be described in detail with reference to the accompanying drawings to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. Like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Battery module

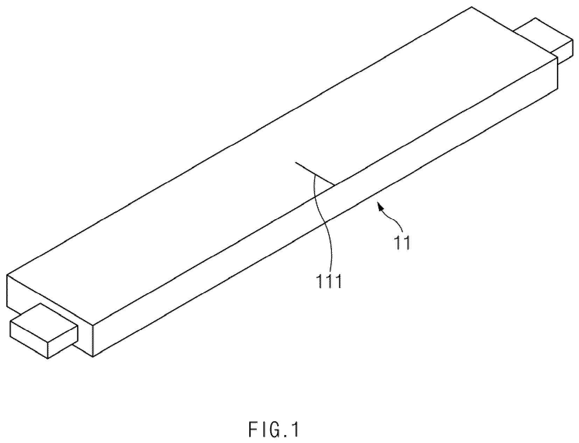

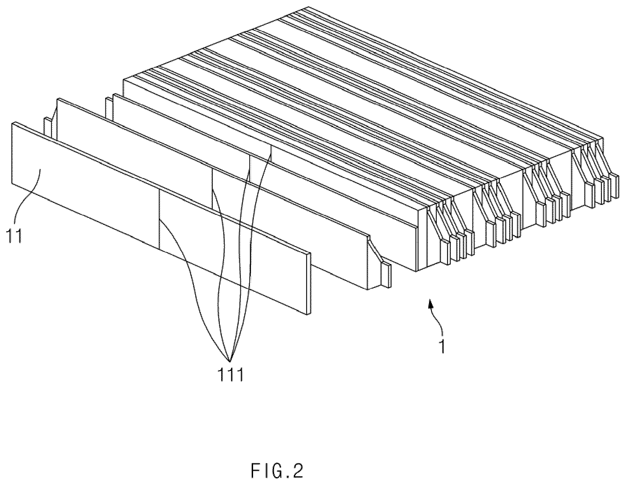

Hereinafter, a battery module 1 according to the present invention will be described in detail with reference to FIGS. 1 and 2.

FIG. 1 is a perspective view illustrating a battery cell according to the present invention. FIG. 2 is a perspective view illustrating a state in which the battery cell is stacked according to the present invention.

Referring to FIGS. 1 and 2, the battery module 1 according to the present invention may include a plurality of battery cells 11. The battery module 1 may include a battery cell case (not shown).

Each of the plurality of battery cells 11 may have a surface on which a central position 111 is marked. The plurality of battery cells 11 may be stacked to constitute the battery module 1. As the plurality of battery cells 11 are stacked, the battery cells 11 need to be aligned to be stacked.

The central position 111 may be marked on a surface of the battery cell 11 and with a line in a direction perpendicular to a longitudinal direction of the battery cell 11. The central position 111 may be marked on a surface of the battery cell 11 and with a line in a direction perpendicular to a longitudinal direction of the battery cell 11. The central position 111 may be marked with an imprint on the surface of the battery cell 11.

In the battery module 1, all of the central positions 111 of the plurality of battery cells 11 may be stacked to overlap each other. Only when all of the central positions 111 are stacked to overlap each other, stability of the battery module 1 may increase. The central position 111 may be marked on a wide surface of the battery cell 11.

The battery module 1 according to the present invention includes the plurality of battery cells 11, and the central position 111 is marked on each of the plurality of battery cells 11. As described above, the plurality of battery cells 11 need to be aligned to be stacked. As the central position 111 is marked on each of the plurality of battery cells 11, when all of the central positions 111 are stacked to match, there is an effect that the plurality of battery cells are capable of being aligned to be stacked. Therefore, there is an effect that misalignment of the battery cells 11 is prevented to improve quality of the module.

### Method for determining center of battery cell

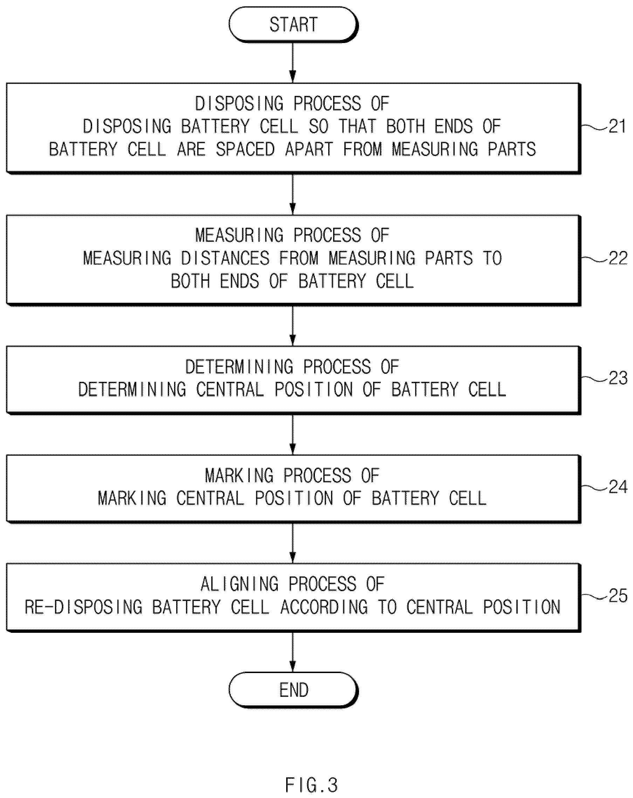

Hereinafter, a method for determining a center of a battery cell according to the present invention will be described in detail with reference to FIGS. 3 to 5.

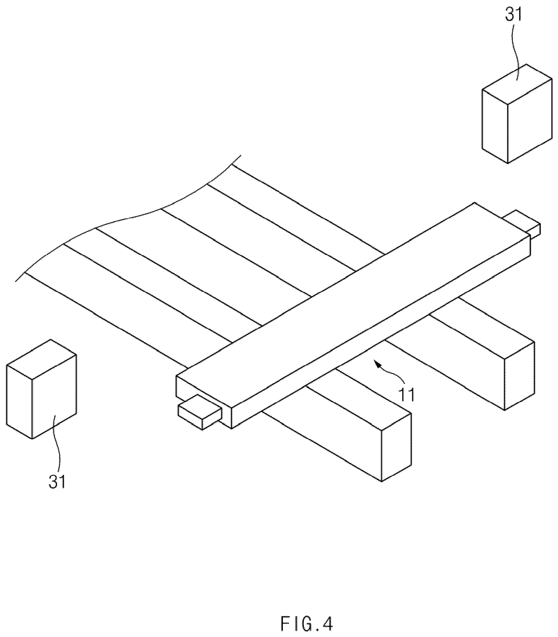

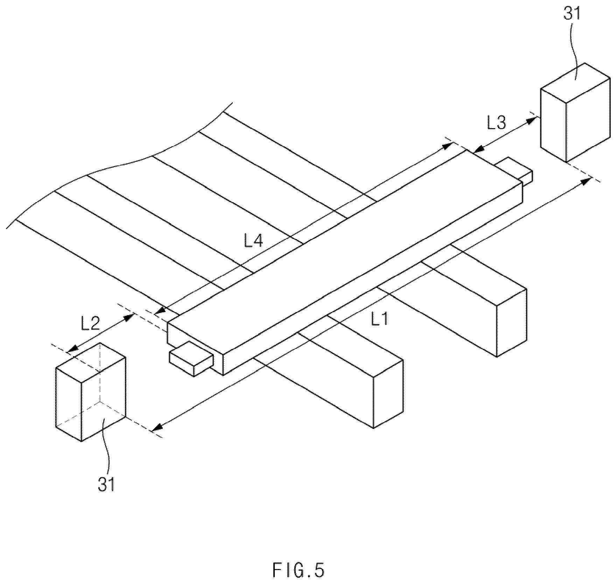

FIG. 3 is a flowchart illustrating a method for determining a center of a battery cell according to the present invention. FIG. 4 is a perspective view illustrating a state before a battery cell is measured using a measuring part according to the present invention. FIG. 5 is a perspective view illustrating a state in which a battery cell is measured using a measuring part according to the present invention.

Referring to FIGS. 3 to 5, the method for determining the center of the battery cell according to the present invention may include a disposing process (21), a measuring process (22), and a determining process (23).

In the disposing process (21), both ends of a battery cell 11 may be disposed to be spaced certain distances from measuring parts 31, respectively. As distances from the measuring parts 31 to both the ends of the battery cell 11 needs to be measured respectively, the measuring parts 31 and both the ends need to be disposed to be spaced apart from each other. The wide surface of the battery cell 11 may be disposed to face an upper side.

In the measuring process (22), the distance from the measuring part 31 to each of both the ends of the battery cell 11 may be measured. The distances from the measuring parts 31 to both the ends of the battery cell 11 may be measured, respectively. In the measuring process (22), the measuring part 31 may measure a shape of each of both the ends of the battery cell 11 to visually express the shapes of both the ends of the battery cell 11. In the measuring process (22), a 2D profile of the battery cell 11 may be detected and measured. As the shapes of both the ends of the battery cell 11 are visually expressed, a lead of the battery cell 11 may also be expressed.

In the measuring process (22), the visually expressed shapes of both the ends of the battery cell 11 may be synthesized. The synthesized shapes of both the ends of the battery cell 11 may be displayed on a display device.

In the determining process (23), information of the distances to both the ends of the battery cell 11 may be provided to determine a central position 111 of the battery cell 11. In the determining process (23), the central position 111 of the battery cell 11 may be determined by a determining part (not shown).

In the determining process (23), a length obtained by subtracting distances L2 and L3 to both the ends of the battery cell 11 from a distance L1 between the measuring parts 31 is a total length L4 of the battery cell 11. A value obtained by adding each of the distances L2 and L3 from the measuring parts 31 to both the ends of the battery cell 11 to half the total length L4 of the battery cell 11 may be a distance from the measuring part 31 to the central position 111 of the battery cell. Thus, in the determining process (23), a value obtained by adding half the total length L4 of the battery cell 11 to the distance from the measuring part 31 to the end of the battery cell 11 is determined to be determined as the central position 111.

The method for determining the center of the battery cell according to the present invention may further include a marking process (24) of making the determined central position 111 of the battery cell 11. In the marking process (24), the central position 111 of the battery cell 11 may be marked by a marking part (not shown).

In the marking process (24), the central position 111 of the battery cell 11 may be marked with an imprint on the surface of the battery cell 11. The central position 111 of the battery cell 11 may be marked using a tape or the like. Only when the central position 111 is determined, and the central position 111 is marked on the battery cell 11, the battery cells 11 may be aligned to be stacked.

The method for determining the center of the battery cell according to the present invention may further include an aligning process (25) of re-disposing the battery cell 11 according to the central position 111. In the aligning process (25), the battery cells 11 may be disposed by aligning all of the central positions 111 to overlap each other.

In the method for determining the center of the battery cell according to the present invention, the measuring part 31 may be a laser profile sensor.

According to the related art, there is an alignment method based on one surface of a lead tab portion of each of battery cells and using a jig in order to determine a central position of the battery cell. As the alignment is performed based on the one surface, there is a problem that when the battery cell is reversed, an opposite tap side is not aligned. In addition, as the alignment is performed in a contact manner by using the jig, there is a problem that the battery cell is damaged.

In the method for determining the center of the battery cell according to the present invention, the battery cell 11 may be aligned in a contactless manner by using the measuring part 31, without being in contact with the battery cell 11. Because of the contactless manner, there is an effect that the battery cells 11 are prevented from being damaged.

As the alignment is not performed only based on one surface, and the central position 111 is determined by measuring the length of the entirety of the battery cell 11, there is an effect that accuracy is capable of being improved. As values obtained by accurately measuring the length and the central position 111 of the battery cell 11 and compiling the same into database are used, there is an effect that the values are capable of being utilized later even for construction of a smart factory or the like. There is also an effect that an additionally datafied value of the central position 111 of the cell is capable of being continuously utilized in a battery module assembling process to contribute to improvement in product yield to a final assembling.

Although the present invention has been described with reference to the limited embodiments and drawings, the present invention is not limited thereto and may be variously implemented by those of ordinary skill in the art to which the present invention pertains, within the technical idea of the present invention and an equivalent of the appended claims.

### [Description of the Symbols]

1: Battery module
11: Battery cell
111: Central position
21: Disposing process
22: Measuring process
23: Determining process
24: Marking process
25: Aligning process
31: Measuring part
L1: Distance between measuring parts
L2, L3: Distances from measuring parts to both ends of battery cell
L4: Total length of battery cell

## Claims

1. A battery module comprising:
a plurality of battery cells; and
a battery cell case configured to accommodate the plurality of battery cells,
wherein a central position of each of the plurality of battery cells in a longitudinal direction is marked on a surface of the battery cell.

2. The battery module of claim 1, wherein the central position is marked on the surface of the battery cell and with a line in a direction perpendicular to the longitudinal direction of the battery cell.

3. The battery module of claim 1, wherein the central position is marked with an imprint on the surface of the battery cell.

4. The battery module of claim 1, wherein all of the central positions of the plurality of battery cells are stacked to overlap each other.

5. A method for determining a center of a battery cell, the method comprising:
a disposing process of disposing the battery cell so that both ends of the battery cell are spaced certain distances from measuring parts, respectively;
a measuring process of measuring distances from the measuring parts to both the ends of the battery cell, respectively; and
a determining process of receiving information of the distances to both the ends of the battery cell to determine a central position of the battery cell by a determining part.

6. The method of claim 5, wherein, in the determining process, the measuring part measures a shape of each of both the ends of the battery cell to visually express the shapes of both the ends of the battery cell.

7. The method of claim 6, wherein, in the measuring process, the visually expressed shapes of both the ends of the battery cell are synthesized.

8. The method of claim 7, wherein, in the measuring process, the synthesized shapes of both the ends of the battery cell are displayed on a display device.

9. The method of claim 5, wherein, in the determining process, a value obtained by adding half the total length of the battery cell, which corresponds to a length obtained by subtracting the distance from each of the measuring parts to both the ends of the battery cell from the distance between the measuring parts, is a distance from the measuring part to the central position of the battery cell.

10. The method of claim 5, further comprising a marking process of marking the determined central position of the battery cell on the battery cell

11. The method of claim 10, wherein, in the marking process, the central position of the battery cell is marked with an imprint on a surface of the battery cell.

12. The method of claim 5, further comprising an aligning process of re-disposing the battery cell according to the central position.

13. The method of claim 5, wherein the measuring part is a laser profile sensor.
